# EUROPEAN PATENT APPLICATION

(11) **EP 0 547 715 A2**
(43) Date of publication of application: **23.06.1993**
(21) Application number: 92203961.5
(22) Date of filing: 16.12.1992
(51) Int. Cl.: H02J 13/00

(54) **Improved interface circuit for control devices of heating appliances, particularly suitable for wall-mounted boilers**

(30) Priority: 19.12.1991 IT MI913416
(71) Applicant: NUOVOPIGNONE INDUSTRIE MECCANICHE E FONDERIA S.p.A., I-50127 Florence (IT)
(72) Inventor: Biagini, Giuliano, I-50013 Campi Bisenzio (Florence) (IT); Lacitignola, Pietro, I-50136 Florence (IT)

(57) **Abstract**

An interface circuit for control devices of heating appliances, particularly suitable for wall-mounted boilers, comprising two optical couplers connected in parallel to the two output terminals of said circuit and powered by a secondary of the heating appliance feed transformer at very low safety voltage, the first coupler being in series with a zener diode and having its NPN transistor powered with positive direct current voltage, whereas the other two couplers have their NPN transistors connected, inverted one to the other, to said terminals and their diodes each connected to a change-over switch switching between earth and said positive direct current voltage; a modification is also provided.

## Description

This invention relates to a new interface circuit for control devices of beating appliances, particularly suitable for wall-mounted boilers, which besides being of low cost, easy installation, compatible with all existing types of two-wire thermostats, powered at very low safety voltage and possessing a high degree of isolation from the remaining circuitry of said heating appliances and a high immunity from external disturbances, comprises a two-wire output line which is bidirectional and can also transmit power for powering said control devices and provide pulse modulation for use in transmitting digital data.

The signals from a control device such as a room thermostat are generally fed to the logic unit of the heating appliance via an interface circuit.

Currently known interface circuits with a two-wire output generally operate at mains voltage and are able to receive only simple on/off signals. There are however some which operate at very low safety voltage and are sometimes able to transmit signals bidirectionally, however they are compatible only with specific types of thermostat constructed specially for this purpose and are unable to transfer power for powering the electronic circuits which may be present in the control device. Other known interface circuits of the art enable power to be transferred, however to achieve this they can no longer use a two-wire connection, but instead require a three or four-wire connection, with consequent installation complications.

The object of the present invention is to obviate the aforesaid drawbacks by providing an interface circuit of two-wire type for control devices of heating appliances, which is able to provide bidirectional signal transmission, is able to transfer power and is able to provide digital pulse modulation for the signal, and which in addition is compatible with all currently available two-wire thermostats, while being of low cost, and providing a high degree of isolation and immunity to disturbances.

This object is substantially attained in that said interface circuit is formed with at least three optical couplers powered, in parallel via a current limiting resistor, from a secondary of the heating appliance feed transformer at very low safety voltage, a further secondary of which, perfectly isolated from the first, powering the synchronizing generator and, via a rectifier-voltage stabilizer, the operating and control circuits of the heating appliance logic unit, for example of microprocessor type, the first of said optical couplers having the cathode of its diode connected to an output terminal of the interface circuit and the anode connected to the corresponding anode of a zener diode, the cathode of which is connected to the other output terminal of the interface circuit, whereas its NPN transistor has its emitter connected to the earth of the direct current voltage generated by said rectifier-stabilizer and its collector connected to the positive pole of said direct current voltage via a load resistor, and also to an input of said control circuit of said logic unit, the second of said optical couplers having the collector of its NPN transistor connected to the cathode of said zener diode and its emitter connected to the cathode of said diode of said first optical coupler, whereas the cathode of its diode is connected to said earth and the anode, in series with a current limiting resistor, is connected to a change-over switch which is switched by said logic unit operating circuit between two positions corresponding to said earth and to said positive pole of said direct current voltage, said change-over switch being connected to said earth when under rest conditions, and finally the third of said optical couplers having the collector of its NPN transistor connected to the cathode of the diode of said first optical coupler and its emitter connected to the cathode of said zener diode, whereas the cathode of its diode is connected to said earth and the anode, in series with a current limiting resistor, is connected to a change-over switch which is switched by said logic unit operating circuit between two positions corresponding to said earth and to said positive pole of said direct current voltage, said change-over switch being connected to said positive pole when under rest conditions.

The advantages of such an interface circuit are now apparent.

Firstly, its constructional simplicity and hence its low cost plus its total electrical isolation deriving from the use of a feed transformer of very low safety voltage type with separate secondaries, and in particular the use of optical couplers.

Again, when under rest conditions and with the output terminals of the interface circuit open, the voltage across said terminals consists only of positive half-waves limited in amplitude by the zener diode, the negative half-waves being short-circuited by the saturated transistor of the third optical coupler, said voltage, by energizing the diode of the first optical coupler, producing a pulse signal at its transistor output which, when analyzed in synchronism by the logic unit, enables it to be determined whether the control device connected to said terminals is "off". In contrast, the absence of a pulse signal at the output of said transistor indicates that said transistor is inhibited and that therefore the positive current half-waves no longer circulate through said diode because they now circulate through the control device, which is "on". Said positive voltage half waves across the terminals can now be partly used to provide power to said control device, for example to power a programmer clock of said control device.

Again, by acting with a logic unit pulse command on the change-over switch of the second optical coupler, a passage of current is produced through the diode of said coupler with consequent saturation of its transistor, by which the positive current half-waves are closed so that positive voltage half-waves will be absent across said terminals. This variation in the sequence of positive half-waves present across the terminals of the interface circuit, made possible by said change-over switch, not only enables power to be removed from a possible indicator of the control device but also enables said sequence to be suitably modulated to transmit information to the control device. Finally, by acting with a logic unit pulse command on the change-over switch of the third optical coupler, current passage through the diode of said optical coupler is annulled with consequent inhibition of its transistor, by which therefore the negative current half-waves are no longer closed so that negative voltage half-waves will be present across said terminals and can be used to power a possible further indicator of the control device. Again, by means of said change-over switch said negative half-waves can be suitably modulated to form a further channel for the transmission of information to said control device.

According to a modification of the present invention, the collector of the NPN transistor of said second optical coupler is connected to said cathode of said zener diode via a second zener diode with its anode connected to said transistor collector and having a threshold value less than that of the other said zener diode.

In this manner, with the change-over switch of said second optical coupler connected to the positive pole of said direct current voltage and hence with current circulation through the diode of said coupler, across the output terminals of the interface circuit, notwithstanding the transistor saturation, there is still a residual voltage limited in amplitude to said threshold value of the second zener diode which, by ensuring the continuous presence of a minimum amplitude of the positive voltage half-waves across said terminals, can provide a better power feed, being uninterrupted, for the circuitry of said control device.

The invention is described in greater detail hereinafter with reference to the accompanying drawings, which illustrate a preferred embodiment thereof by way of non-limiting example only, in that technical or constructional modifications can be made thereto but without leaving the scope of the present invention.

In said drawings:
Figure 1 shows the circuit diagram of the interface circuit according to the present invention, with a modification of the invention being shown by dashed lines;
Figure 2 shows the wave forms at various points of the circuit of Figure 1, and of which:
Figure 2a) shows the wave form of the voltage across the output terminals of the interface circuit when under rest conditions;
Figure 2b) shows the wave form of the current passing through the diode of the first optical coupler when under said rest conditions;
Figure 2c) shows the wave form of the output signal of the transistor of the first optical coupler;
Figure 2d) shows the wave form of the voltage across the output terminals of the interface circuit with the change-over switch of the third optical coupler switched to earth;
Figure 2e) shows the wave form of the voltage across the output terminals of the interface circuit with the change-over switch of the third optical coupler switched to earth and with the change-over switch of the second optical coupler switched to the positive pole;
Figure 2f) shows the wave form of the voltage across the output terminals of the interface circuit with the change-over switch of the third optical coupler switched to earth and with the change-over switch of the second optical coupler switched to the positive pole, in the modification according to the invention.

In the figures, the reference numerals 1 and 2 indicate the two output terminals of the interface circuit 3, to be connected to a control device 4 of a heating appliance not shown in the figure.

Said terminal 1 is connected via the wire 5 and the current limiting resistor 6 to one end of a secondary 7 of the heating appliance feed transformer 8, of very low safety voltage, its other end being connected by the wire 9 to said terminal 2.

Another secondary 10 of said transformer 8, perfectly isolated from said first secondary, feeds a rectifier-stabilizer 11 which provides at its output 12 a voltage +V with respect to earth 13, and also feeds a synchronizing generator 14 governing the operating circuit 15 and control circuit 16 of the logic unit 17 of said heating appliance. Between the two said wires 5 and 9 there are connected in parallel three optical couplers 18, 19 and 20 respectively. The first, 18, of said optical couplers has the cathode 21 of its diode 22 connected to said wire 9, whereas the anode 23 is connected to the anode 24 of a zener diode 25 the cathode 26 of which is connected to said wire 5. The NPN transistor 27 of said optical coupler 18 is connected with its emitter 28 to said earth 13 and with its collector 29 to said positive pole 12 via a load resistor 30, and to an input 31 of said control circuit 16. The second, 19, of said optical couplers has the collector 32 of its transistor 33, also of NPN type, connected to said wire 5 and the emitter 34 connected to the wire 9. The cathode 35 of its diode 36 is connected to said earth 13 whereas its anode 37 is connected, via a current limiting resistor 38, to a change-over switch 39 switched by said control circuit 15, via the wire 40, between two positions corresponding to said earth 13 and to said positive pole 12, said change-over switch 39 being connected to said earth 13 when under rest conditions. The third, 20, of said optical couplers has the collector 41 of its transistor 42, also of NPN type, connected to said wire 9 and the emitter 43 connected to the wire 5. The cathode 44 of its diode 45 is connected to said earth 13 whereas its anode 46 is connected, via a current limiting resistor, 47 to a change-over switch 48 switched by said control circuit 15, via the wire 49, between two positions corresponding to said earth 13 and to said positive pole 12, said change-over switch 48 being connected to said positive pole 12 when under rest conditions.

Finally, according to a modification of the invention, between the collector 32 of the transistor 33 of the second optical coupler 19 and said wire 5 there is connected a second zener diode 50, the anode 51 of which is connected to said collector 32.

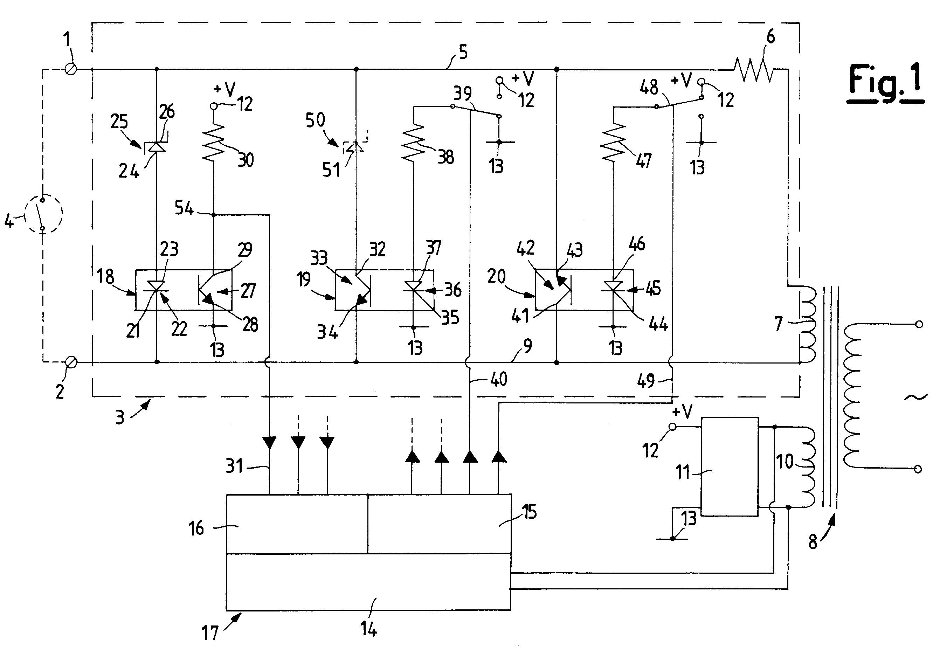

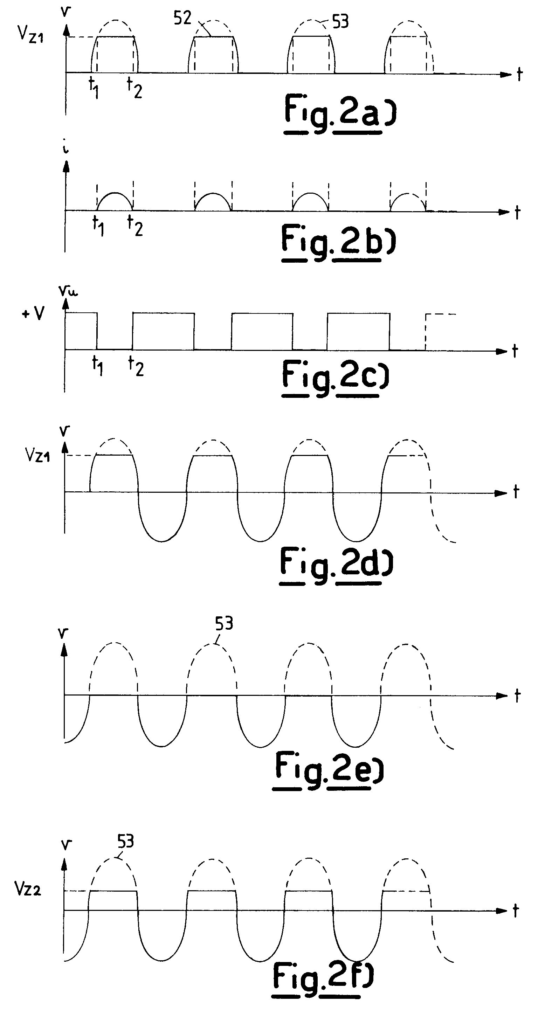

In this manner, when under the conditions shown in Figure 1, the third optical coupler 20 short-circuits the negative voltage half-waves via its saturated transistor 42, so that across the terminals 1 and 2 there is the voltage wave form 52 of Figure 2a), consisting only of positive half-waves the amplitude of which is limited, compared with the amplitude 53 of the whole half-wave, by the threshold value V_{z1} of the zener diode 25. Correspondingly, current pulses pass through the diode 22 of the first optical coupler 18 only during time intervals t1-t2 in which the voltage is at the threshold value V_{z1} of the zener diode 25, these pulses therefore having the form shown in Figure 2b). Again, when said current pulses are present, the transistor 27 of said first optical coupler 18 is saturated and consequently the output voltage vᵤ of the coupler at the point 54 is annulled, whereas during the time intervals in which current circulation is absent, the corresponding inhibition of said transistor 27 means that the voltage at said output point 54 reaches the value +V present at the positive pole 12. Hence at the point 54 the voltage wave form is as shown in Figure 2c).

When the change-over switch 48 of the third optical coupler 20 is switched to earth 13, its transistor 42 is inhibited and therefore no longer short-circuits the negative voltage half-waves with the result that the voltage across the output terminals 1 and 2 has the pattern of Figure 2d). Again, when in this condition and with the change-over switch 39 of said second optical coupler 19 switched to the positive pole 12, the positive voltage half-waves 53 across the output terminals 1 and 2 are annulled by the saturation of the transistor 33 of said second coupler 19, with the result that the wave form across said terminals is as shown in Figure 2e).

Finally, if the zener diode 50 of the modification of the invention is present, said voltage wave form across the terminals 1 and 2 shown in Figure 2e) changes to the wave form shown in Figure 2f) because said zener diode 50 allows the positive half-waves 53 to pass until the threshold voltage V_{z2} of said zener diode 50 is reached.

## Claims

1. An interface circuit for the control devices of heating appliances, having two output terminals to be connected to said control devices and connections to the heating appliance logic unit operating and control circuits, which are powered via a rectifier-voltage stabilizer from a secondary of the heating appliance feed transformer, characterised by comprising at least three optical couplers powered, in parallel via a current limiting resistor, from another secondary, perfectly isolated from the first, of said feed transformer at very low safety voltage, said first secondary powering the synchronizing generator governing said operating and control circuits of the heating appliance logic unit, the first of said optical couplers having the cathode of its diode connected to an output terminal of the interface circuit and the anode connected to the corresponding anode of a zener diode, the cathode of which is connected to the other output terminal of the interface circuit, whereas its NPN transistor has its emitter connected to the earth of the direct current voltage generated by said rectifier-stabilizer and its collector connected to the positive pole of said direct current voltage via a load resistor, and also to an input of said control circuit of said logic unit, the second of said optical couplers having the collector of its NPN transistor connected to the cathode of said zener diode and its emitter connected to the cathode of said diode of said first optical coupler, whereas the cathode of its diode is connected to said earth and the anode, in series with a current limiting resistor, is connected to a change-over switch which is switched by said logic unit operating circuit between two positions corresponding to said earth and to said positive pole of said direct current voltage, said change-over switch being connected to said earth when under rest conditions, and finally the third of said optical couplers having the collector of its NPN transistor connected to the cathode of the diode of said first optical coupler and its emitter connected to the cathode of said zener diode, whereas the cathode of its diode is connected to said earth and the anode, in series with a current limiting resistor, is connected to a change-over switch which is switched by said logic unit operating circuit between two positions corresponding to said earth and to said positive pole of said direct current voltage, said change-over switch being connected to said positive pole when under rest conditions.

2. An interface circuit for the control devices of heating appliances as claimed in claim 1, characterised in that the collector of the NPN transistor of said second optical coupler is connected to said cathode of said zener diode via a second zener diode connected with its anode to said transistor collector and having a threshold value less than that of the other zener diode.
